# EUROPÄISCHE PATENTSCHRIFT

(11) **EP 1 590 070 B1**
(45) Veröffentlichungstag und Bekanntmachung des Hinweises auf die Patenterteilung: **04.02.2009**
(21) Anmeldenummer: 03795877.4
(22) Anmeldetag: 09.12.2003
(51) Int. Cl.: B01D 53/94

(54) **ABGASNACHBEHANDLUNGSSYSTEM UND NUTZFAHRZEUG MIT ABGASNACHBEHANDLUNGSSYSTEM**
WASTE-GAS POST-TREATMENT SYSTEM AND COMMERCIAL VEHICLE WITH A WASTE-GAS POST-TREATMENT SYSTEM
SYSTEME DE POST-TRAITEMENT DE GAZ D'ECHAPPEMENT ET VEHICULE UTILITAIRE EQUIPE D'UN TEL SYSTEME DE POST-TRAITEMENT DE GAZ D'ECHAPPEMENT

(30) Priorität: 07.02.2003 DE 10305057
(43) Veröffentlichungstag der Anmeldung: 02.11.2005
(73) Patentinhaber: Daimler AG, 70327 Stuttgart (DE)
(72) Erfinder: KOHLER, Gerhard, 73733 Esslingen (DE); LADENBURGER, Werner, 71364 Winnenden (DE)
(86) Internationale Anmeldenummer: PCT/EP2003/013918
(87) Internationale Veröffentlichungsnummer: WO 2004/069388

(56) Entgegenhaltungen:
- WO-A-01/42633
- DE-A- 10 128 414
- DE-A- 19 636 747
- US-B- 6 199 375

## Beschreibung

Die Erfindung betrifft ein Abgasnachbehandlungssystem mit den Merkmalen des Oberbegriffs des Anspruchs 1 und ein Nutzfahrzeug mit einem Abgasnachbehandlungssystem mit den Merkmalen des Oberbegriffs des Anspruchs 6.

In der Patentanmeldung WO 01/42633 ist ein mehrere separate Einheiten umfassendes Abgasnachbehandlungssystem beschrieben: Das Abgasnachbehandlungssystem kann beispielsweise eine Partikelverminderungseinheit und eine Stickoxidverminderungseinheit aufweisen. Als Stickoxidverminderungseinheit ist ein SCR-Katalysator (SCR = selective catalytic reduction) vorgesehen, welcher mit Harnstoff als selektivem Reduktionsmittel für die Stickoxide versorgt wird. Das beschriebene Abgasnachbehandlungssystem kommt hauptsächlich für einen Einsatz in Nutzfahrzeugen in Betracht. Gegenstand der WO 01/42633 ist im wesentlichen die Realisierung einer vorteilhaften Verbindung der Einheiten des Abgasnachbehandlungssystems untereinander. Die mit einem Einbau in ein Nutzfahrzeug verbundenen Einbauprobleme bleiben außer Betracht.

Das Dokument US 6 199 375 offenbart ein Abgasnachbehandlungssystem nach dem Oberbegriff des Anspruchs 1 bzw ein Nutzfahrzeug nach dem Oberbegriff des Anspruchs 6.

Die mit wachsenden Anforderungen an die Abgasreinigung zunehmende Komplexität und Größe von Abgasnachbehandlungssystemen bedingen jedoch in erhöhtem Maße Schwierigkeiten hinsichtlich des Einbaus und der Anordnung in einem entsprechenden Nutzfahrzeug. Bei der baulichen Anordnung der Einheiten eines Abgasnachbehandlungssystems muss zudem in besonderem Maße auf eine wirksame und zuverlässige Funktion des Abgasnachbehandlungssystems geachtet werden. Damit ergeben sich zwangsläufig Schwierigkeiten bei der Anordnung bzw. Unterbringung dieser Einheiten, insbesondere im Zusammenhang mit der Anordnung weiterer zum Betrieb des Nutzfahrzeugs notwendiger Baugruppen, wie beispielsweise dem üblicherweise ebenfalls sehr voluminösen Kraftstofftank.

Aufgabe der Erfindung ist es daher, ein kompaktes Abgasnachbehandlungssystem für eine umfassende und wirksame Nachbehandlung des Abgases eines Nutzfahrzeugs anzugeben. Außerdem ist es Aufgabe der Erfindung, ein Nutzfahrzeug mit einem Abgasnachbehandlungssystem mit einer günstigen und platzsparenden Anordnung anzugeben.

Diese Aufgabe wird erfindungsgemäß durch ein Abgasnachbehandlungssystem mit den Merkmalen des Anspruchs 1 und durch ein Nutzfahrzeug mit den Merkmalen des Anspruchs 6 gelöst.

Das erfindungsgemäße Abgasnachbehandlungssystem zeichnet sich dadurch aus, dass die Stickoxidverminderungseinheit mit einem Abstand zur Partikelverminderungseinheit angeordnet ist, und ein Reduktionsmitteltank zur Bevorratung eines für die Stickoxidverminderung einsetzbaren Reduktionsmittels vorgesehen ist, der zwischen der Partikelverminderungseinheit und der Stickoxidverminderungseinheit angeordnet ist. Vorzugsweise sind die Partikelverminderungseinheit, der Reduktionsmitteltank und die Stickoxidverminderungseinheit hintereinander in einer linear fluchtenden Anordnung positioniert. Der Abstand zwischen der Partikelverminderungseinheit und der Stickoxidverminderungseinheit wird je nach den baulichen Gegebenheiten und je nach Größe und Gestalt des Reduktionsmitteltanks geeignet gewählt bzw. vorgegeben.

Unter einer Partikelverminderungseinheit wird hier eine vom Abgas einer Brennkraftmaschine durchströmbare Baueinheit verstanden, mit welcher eine Verminderung der Partikelmasse und/oder der Partikelanzahl in dem sie durchströmenden Abgas erreicht werden kann. Vorzugsweise ist als partikelverminderndes Bauteil im Inneren dieser Baueinheit ein Partikelfilter angeordnet. Gegebenenfalls können weitere reinigungswirksame Komponenten in der Baueinheit angeordnet sein, insbesondere Komponenten, welche die Partikelverminderung zusätzlich unterstützen oder zu einer Regeneration eines Partikelfilters beitragen. Beispielsweise kann in der Partikelverminderungseinheit ein Oxidationskatalysator angeordnet sein, welcher vorzugsweise dem Partikelfilter strömungsmäßig vorgeschaltet ist.

Unter einer Stickoxidverminderungseinheit wird eine vom Abgas einer Brennkraftmaschine durchströmbare Baueinheit verstanden, mit welcher eine Verminderung des Stickoxidgehalts in dem sie durchströmenden Abgas erreicht werden kann. Vorzugsweise ist im Inneren dieser Baueinheit ein Denox-Katalysator angeord-net, der insbesondere als SCR-Katalysator ausgeführt sein kann.

Gegebenenfalls können in der Stickoxidverminderungseinheit weitere Komponenten, wie beispielsweise ein Hydrolysekatalysator zur Aufbereitung von Harnstoff angeordnet sein. Ferner kann ein Oxidationskatalysator, beispielsweise zur Oxidation von Ammoniak, dem Denox-Katalysator nachgeschaltet in der Stickoxidverminderungseinheit angeordnet sein.

Bei dem im Reduktionsmitteltank bevorrateten Reduktionsmittel handelt es sich vorzugsweise um einen flüssigen Kohlenwasserstoff oder eine Harnstoff-Wasser-Lösung.

Die erfindungsgemäße Anordnung des Reduktionsmitteltanks zwischen der Partikelverminderungseinheit und der Stickoxidverminderungseinheit ermöglicht eine platzsparende und kompakte Ausführung des Abgasnachbehandlungssystems mit geringen Leitungslängen und einer vergleichsweise kleinen wirksamen äußeren Oberfläche, so dass Wärmeverluste klein gehalten werden können.

Das Abgasnachbehandlungssystem dient gleichzeitig der Schalldämpfung, so dass auf einen separaten Schalldämpfer gegebenenfalls verzichtet und somit Bauraum eingespart werden kann.

In Ausgestaltung der Erfindung umgibt der Reduktionsmitteltank die Abgasverbindungsleitung wenigstens teilweise. Vorzugsweise weist der Reduktionsmitteltank eine Ausformung auf, in welcher die Abgasverbindungsleitung verläuft und die beispielsweise in Form einer Mulde ausgebildet ist. Ebenfalls vorteilhaft ist es, den Reduktionsmitteltank mit einer zylindrischen Durchführung zu versehen, so dass er zur Montage auf die Abgasverbindungsleitung aufgeschoben werden kann. Durch die genannten Ausführungen wird eine besonders kompakte Bauweise des Abgasnachbehandlungssystems erreicht.

In weiterer Ausgestaltung der Erfindung weist der Reduktionsmitteltank eine Ausformung zur Aufnahme einer Reduktionsmitteldosiereinheit auf. Von der Reduktionsmitteldosiereinheit wird Reduktionsmittel, vorzugsweise in vorgebbaren Mengen und zu betriebspunktabhängigen Zeitpunkten, über eine geeignete Leitung und Reduktionsmittelzugabvorrichtung dem Abgas zudosiert. Durch die bauliche Integration von Reduktionsmitteltank und Reduktionsmitteldosiereinheit werden Zerklüftungen und Überstände vermieden und eine kompakte Ausführung mit einheitlicher Oberfläche erzielt.

In weiterer Ausgestaltung der Erfindung ist die Abgasverbindungsleitung als Mischstrecke zur Vermischung von Abgas mit zudosiertem Reduktionsmittel ausgeführt. Eine Zugabestelle des Reduktionsmittels ist möglichst weit stromauf an der Abgasverbindungsleitung oder an einer weiteren stromaufwärtigen Verlängerung angebracht, welche bis in die Partikelverminderungseinheit geführt sein kann. Durch diese erfindungsgemäße Maßnahme wird auf platzsparende Weise eine ausreichend lange Mischstrecke zur Vermischung und Homogenisierung von Abgas und Reduktionsmittel bereitgestellt.

In weiterer Ausgestaltung der Erfindung sind die Partikelverminderungseinheit, die Stickoxidverminderungseinheit und der Reduktionsmitteltank als Einzelmodule ausgeführt.

Das erfindungsgemäße Nutzfahrzeug zeichnet sich dadurch aus, dass das zugehörige Abgasnachbehandlungssystem innerhalb eines vorgebbaren quaderförmigen Hüllvolumens angeordnet ist. Dabei begrenzt das Hüllvolumen die räumliche Ausdehnung des Abgasnachbehandlungssystems und wird von diesem annähernd ausgefüllt. Das Hüllvolumen ist in erster Linie in Abhängigkeit von der Motorklasse des Nutzfahrzeugs vorgebbar und wird durch seine Längen-, Breiten- und Höhenabmessungen bestimmt. Vorzugsweise ist aber auch die Platzierung des Hüllvolumens im Nutzfahrzeug selbst vorgebbar. Unter Motorklasse ist hier eine vorzugsweise nach Hubraum und/oder Nennleistung vorgenommene Gruppierung der Nutzfahrzeugmotoren zu verstehen. Diese Gruppierung ist vorzugsweise auch mit der Ausführungsform des Nutzfahrzeugs, beispielsweise bezüglich Anzahl der Achsen, der Gesamtbreite, des seitlichen Abstands der Längsträger und/oder weiterer klassifizierender Merkmale, verknüpft. Eine besonders einfache Gruppierung wird durch die Einteilung der Motorklassen durch ihre Zugehörigkeit zu einem schweren, mittleren oder leichten Nutzfahrzeug erreicht.

In Ausgestaltung des Nutzfahrzeugs erstreckt sich das Hüllvolumen an der von der Fahrzeuglängsachse abgewandten Seite eines ersten Längsträgers in Fahrzeuglängsrichtung. Durch diese Anordnung wird der Bereich zwischen den Längsträgern freigehalten für andere Baugruppen, insbesondere für die Durchführung des Antriebsstrangs.

In weiterer Ausgestaltung des Nutzfahrzeugs ist eine vom Abgasnachbehandlungssystem wegführende Abgasauslassleitung auf die in Fahrzeugrichtung gegenüberliegende Seite des Nutzfahrzeugs geführt. Durch diese Ausführung wird erreicht, dass der Abgasauslass auf die zur Verkehrswegmitte hin weisende Seite des Nutzfahrzeugs geführt ist. Dadurch wird die Abgabe von Abgas in Richtung auf Bürgersteige vermieden, was insbesondere bei im kommunalen Bereich eingesetzten Nutzfahrzeugen von Bedeutung ist.

In weiterer Ausgestaltung des Nutzfahrzeugs weist die von der Fahrzeuglängsachse abgewandte Seite des Hüllvolumens einen in Abhängigkeit von einer Motorklasse des Nutzfahrzeugs vorgebbaren Abstand vom ersten Längsträger auf. Damit wird die Breite des Hüllvolumens und damit die maximale Breitenabmessung des darin angeordneten Abgasnachbehandlungssystems in Abhängigkeit von der Motorklasse vorgegeben. Dies geschieht insbesondere auch im Hinblick auf die Auslegung der gesamten Breitenabmessung des Nutzfahrzeugs, welche durch besondere konstruktive oder gesetzgeberische Bedingungen vorgegeben sein kann.

In weiterer Ausgestaltung des Nutzfahrzeugs ist das Abgasnachbehandlungssystem auf einer an dem ersten Längsträger befestigbaren Tragstruktur aufgebaut. Damit wird der Längsträger zur stabilen Unterbringung und Befestigung des Abgasnachbehandlungssystem im Nutzfahrzeug ausgenutzt. Die Module des Abgasnachbehandlungssystem brauchen selbst keine tragenden Funktionen zu übernehmen und können in leichterer Bauweise ausgeführt sein. Die Austauschbarkeit einzelner Module ist dadurch ebenfalls erleichtert.

In weiterer Ausgestaltung des Nutzfahrzeugs ist ein Kraftstofftank neben einem zweiten Längsträger des Nutzfahrzeugs an der von der Fahrzeuglängsachse abgewandten Seite des zweiten Längsträgers angeordnet. Vorzugsweise ist der Kraftstofftank in Längsrichtung etwa in der Höhe des Abgasnachbehandlungssystems angeordnet. Durch diese Anordnung wird eine hinsichtlich des gemeinsamen Schwerpunkts gleichmäßige Massenverteilung der betreffenden Baugruppen erreicht.

Im Folgenden wird die Erfindung anhand von Zeichnungen und zugehörigen Beispielen näher erläutert. Dabei zeigen:
- Fig. 1: eine schematische Darstellung einer Ausführungsform eines erfindungsgemäßen Abgasnachbehandlungssystems,
- Fig. 2: eine schematische Darstellung einer Ausführungsform eines Reduktionsmitteltanks als Bestandteil des Abgasnachbehandlungssystems,
- Fig. 3: eine schematische Darstellung einer zweiten Ausführungsform des erfindungsgemäßen Abgasnachbehandlungssystems,
- Fig. 4: eine schematische Darstellung einer Ausführungsform des Aufbaus eines erfindungsgemäßen Nutzfahrzeugs.

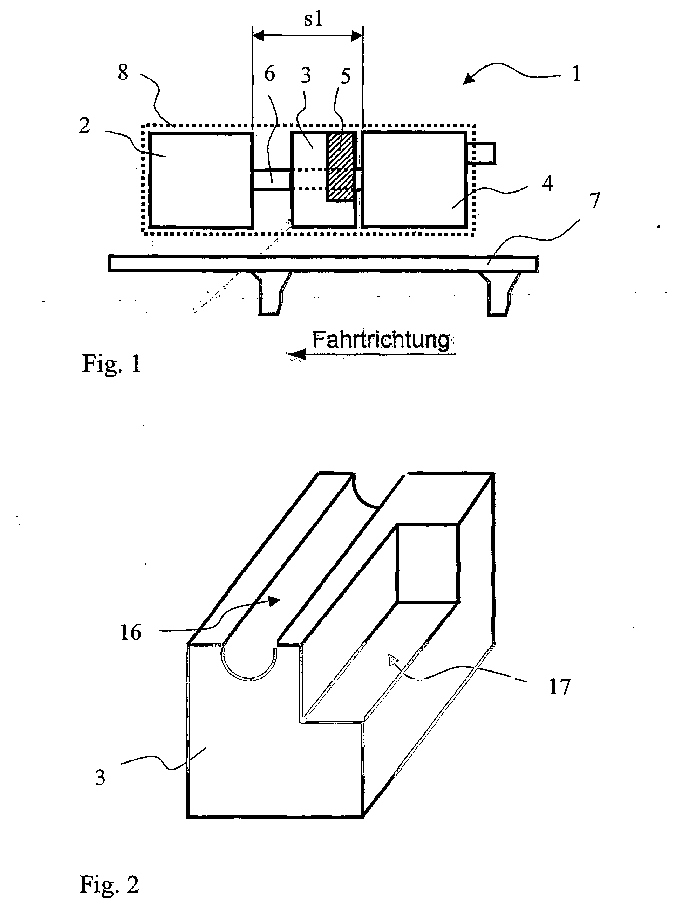

Das in Fig. 1 in einer Draufsicht schematisch dargestellte Abgasnachbehandlungssystem 1 umfasst in einer linearen Anordnung eine Partikelverminderungseinheit 2, einen Reduktionsmitteltank 3 und eine Stickoxidverminderungseinheit 4. Von Partikeln gereinigtes Abgas wird über eine Abgasverbindungsleitung 6 von der Partikelverminderungseinheit 2 zur Stickoxidverminderungseinheit 4 geleitet. Das Abgasnachbehandlungssystem 1 weist ferner eine Reduktionsmitteldosiereinheit 5 zur Dosierung des Reduktionsmittels in das Abgas auf. Das gesamte Abgasnachbehandlungssystem 1 ist dabei hier in Fahrtrichtung gesehen rechts von einem rechten Längsträger 7 des Nutzfahrzeugs auf einer nicht dargestellten Tragstruktur angeordnet, welche an dem Längsträger 7 befestigt ist. Je nach Bauart des Fahrzeugs kann das Abgasnachbehandlungssystem 1 an unterschiedlichen Stellen angeordnet sein. Aus Stabilitätsgründen sowie aus Platzgründen ist jedoch eine Anordnung an einer von der Fahrzeuglängsachse abgewandten Seite eines Längsträgers bevorzugt. Die Hauptströmungsrichtung des Abgases durch das Abgasnachbehandlungssystem 1 verläuft in diesen Fällen bei horizontaler Anordnung des Abgasnachbehandlungssystems analog der Darstellung in Fig. 1 entgegen der Fahrtrichtung.

Die Partikelverminderungseinheit 2, der Reduktionsmitteltank 3 und die Stickoxidverminderungseinheit 4 sind als Einzelmodule, vorzugsweise mit im wesentlichen quaderförmiger Gestalt ausgebildet und weisen hier dieselben Querabmessungen auf. Die Höhenabmessungen der Einzelmodule 2, 3, 4 sind vorzugsweise ebenfalls gleich. Die Einzelmodule 2, 3, 4 des Abgasnachbehandlungssystems 1 weisen daher in jeweils einer Ebene liegenden linke und rechte Seitenflächen bzw. obere und untere Seitenflächen auf. Die Einzelmodule 2, 3, 4 sind lösbar im gesamten Abgasnachbehandlungssystem integriert, so dass sie einzeln montiert bzw. ausgetauscht werden können. Erfindungsgemäß ist sind die Partikelverminderungseinheit 2 und die Stickoxidverminderungseinheit 4 in einem Abstand s1 zueinander angeordnet. Dieser Abstand s1 ist vorzugsweise so vorgegeben, dass verschieden ausgeführte Reduktionsmitteltanks 3 zwischen den Einheiten 2, 4 angeordnet werden können. Dadurch kann ein Baukastenprinzip für verschiedene Ausführungen des Abgasnachbehandlungssystems 1 mit einem hohen Anteil an Gleichteilen verwirklicht werden. Dadurch kommt der Vorteil des modularen Aufbaus des Abgasnachbehandlungssystems 1 besonders wirkungsvoll zur Geltung.

Das gesamte Abgasnachbehandlungssystem 1 ist innerhalb eines quaderförmigen Hüllvolumens 8 angeordnet, dessen Umrisse in Fig. 1 gestrichelt dargestellt sind. Dieses Hüllvolumen 8 erstreckt sich in der Nähe einer Fahrzeugaußenseite, in diesem fall in Fahrtrichtung gesehen rechts vom Längsträger 7. Die Ebene, in welcher die das Hüllvolumen 8 definierenden Seitenflächen liegen, werden hierbei durch die Seitenflächen der Partikelverminderungseinheit 2 und der Stickoxidverminderungseinheit 4 gebildet. Die Größe und die Abmessungen des Hüllvolumens 8 sind durch die Motorklasse des Nutzfahrzeuges vorgegeben, in welchem das Abgasnachbehandlungssystem 1 zum Einsatz kommt. Dabei kann die Zugehörigkeit eines bestimmten Fahrzeugs zu einer Motorklasse beispielsweise durch die Motorleistung bestimmt sein und eine Motorklasse wiederum einen gewissen Motorleistungsbereich abdecken. Die Längen- und Breitenabmessungen des Abgasnachbehandlungssystems 1 bzw. des Hüllvolumens 8 orientieren sich maßgeblich an den maximal zulässigen Fahrzeugbreiten und dem Abstand der Längsträger sowie dem Volumen der Module 2, 3, 4. Die Bauhöhe des Abgasnachbehandlungssystems 1 bzw. des Hüllvolumens 8 resultiert maßgeblich aus den genannten Größen und der Bereifung des Fahrzeuges sowie aus der vorgesehenen Bodenfreiheit.

In der nachfolgenden Tabelle sind für drei Motorklassen MK typische Werte für die Motorleistung P, das Volumen V_{P} der Partikelverminderungseinheit 2, das Volumen V_{T} des Reduktionsmitteltanks 3, des Volumens V_{S} der Stickoxidverminderungseinheit 4, die Länge L des Hüllvolumens 8 und der Breite B des Hüllvolumens 8 angegeben.

| MK | P (kW) | V_{P} (1) | V_{T} (1) | V_{S} (1) | L (mm) | B (mm) |
|---|---|---|---|---|---|---|
| leicht | 110 - 170 | 100 | 40 | 100 | 1500 | 600 |
| mittel | 180 - 320 | 150 | 70 | 150 | 1600 | 700 |
| schwer | 260 - 430 | 180 | 100 | 220 | 1700 | 700 |

Die Partikelverminderungseinheit 2 weist in ihrem Inneren als partikelverminderndes Bauteil ein oder mehrere Partikelfilter auf. Das oder die Partikelfilter können hierbei beispielsweise als Wallflow-Filter in Wabenkörperform oder als Sintermetallplattenfilter in gefalteter Form ausgeführt sein. Ohne Einschränkung der Allgemeinheit wird nachfolgend von einem Partikelfilter gesprochen, obwohl das partikelvermindernde Bauteil auch davon abweichend ausgeführt sein kann. Falls mehrere einzelne Partikelfilterelemente in der Partikelverminderungseinheit 2 angeordnet sind, so sind diese strömungsmäßig vorzugsweise parallel geschaltet. Ferner ist im Inneren der Partikelverminderungseinheit 2 ein Oxidationskatalysator strömungsmäßig dem Partikelfilter vorgeschaltet. Durch im Oxidationskatalysator gebildetes Stickstoffdioxid kann auch bei vergleichsweise niedrigen Abgastemperaturen eine Oxidation von im Partikelfilter abgelagerten Rußpartikeln stattfinden, wodurch das Partikelfilter kontinuierlich regeneriert werden kann. Ferner kann durch Nachoxidation von im Abgas enthaltenen brennbaren Bestandteilen im Oxidationskatalysator eine wirkungsvolle Anhebung der Abgastemperatur, beispielsweise zum Zwecke einer thermischen Regeneration des Partikelfilters, erfolgen. Dabei kann der Oxidationskatalysator mehrere Elemente umfassen, welche strömungsmäßig untereinander parallel geschaltet sind.

Über die Abgasverbindungsleitung 6 wird von Partikeln gereinigtes Abgas weiter zur Stickoxidverminderungseinheit 4 geleitet. Diese weist in ihrem Inneren ein oder mehrere Denox-Katalysatorelemente auf. Ohne Einschränkung der Allgemeinheit wird nachfolgend davon ausgegangen, dass es sich hierbei um einen sogenannten SCR-Katalysator handelt, welcher bei Anwesenheit von Ammoniak als Reduktionsmittel die Umsetzung von im Abgas enthaltenen Stickoxiden zu Stickstoff katalysieren kann. Falls mehrere SCR-Katalysatorelemente in der Stickoxidverminderungseinheit 4 angeordnet sind, so sind diese strömungsmäßig vorzugsweise parallel geschaltet. Da vorzugsweise Harnstoff-Wasser-Lösung als ammoniakabspaltendes Reduktionsmittel eingesetzt wird, kann dem SCR-Katalysator ein Hydrolysekatalysator vorgeschaltet sein, welcher die Freisetzung von Ammoniak fördert und ebenfalls in der Stickoxidverminderungseinheit 4 angeordnet ist.

In Fig. 2 ist eine Ausführungsform des zwischen der Partikelverminderungseinheit 2 und der Stickoxidverminderungseinheit 4 angeordneten Reduktionsmitteltanks 3 dargestellt, die unter Bezugnahme auf die in Fig. 1 dargestellten Bauteile erläutert wird. Der Reduktionsmitteltank 3 besitzt hier eine muldenförmige Ausformung 16 in der die Abgasverbindungsleitung 6 verläuft. Selbstverständlich kann die Abgasverbindungsleitung 6 jedoch auch durch den Reduktionsmitteltank 3 hindurch geführt sein. Dadurch wird einerseits eine kompakte Bauform erreicht, andererseits ist ein guter Wärmeübergang von der Abgasverbindungsleitung 6 auf das Reduktionsmittel gewährleistet, so dass dessen Einfrieren vermieden wird, bzw. ein rasches Auftauen von ganz oder teilweise eingefrorenem Reduktionsmittel ermöglicht ist. Ein zu starker Wärmefluss auf das Reduktionsmittel bzw. die Wand des Reduktionsmitteltanks 3 wiederum kann durch eine geeignete Wärmeisolierung vermieden werden., Die Reduktionsmitteldosiereinheit 5 kann außerhalb des Hüllvolumens 8 angeordnet sein. Es ist jedoch auch vorteilhaft, volumens 8 angeordnet sein. Es ist jedoch auch vorteilhaft, diese räumlich in den Reduktionsmitteltank 3 zu integrieren, wozu der Reduktionsmitteltank 3 eine entsprechende Ausformung 17 aufweist.

Über ein nicht dargestelltes Steuergerät wird die Redukionsmitteldosiereinheit 5 so angesteuert, dass eine bedarfsgerechte Zudosierung von Reduktionsmittel in die Abgasleitung erfolgen kann. Hierzu weist die Reduktionsmitteldosiereinheit 5 vorzugsweise eine geeignete Pumpe auf, mit welcher Reduktionsmittel über ein Leitungssystem einem Dosierventil zugeführt, über welches das Reduktionsmittel dem Abgas zugesetzt wird. Die Reduktionsmittelzugabe in das Abgas erfolgt dabei soweit stromauf der Stickoxidverminderungseinheit 4 bzw. des SCR-Katalysators, dass eine ausreichende Vermischung und Aufbereitung des Reduktionsmittels erfolgen kann. Diesem Zweck dient die Abgasverbindungsleitung 6 als Mischstrecke für das zugesetzte Reduktionsmittel. Die gesamte Länge der Mischstrecke beträgt etwa 1 m. Um diese Länge zu realisieren, kann die Abgasverbindungsleitung 6 eine innerhalb der Partikelverminderungseinheit 2 und/oder der Stickoxidverminderungseinheit 4 verlaufende Verlängerung aufweisen.

Das Volumen der in Fig. 1 dargestellten Partikelverminderungseinheit 2 und der Stickoxidverminderungseinheit 4 beträgt jeweils etwa 100 1. Damit ist das Abgasnachbehandlungssystem 1 einer leichten Motorklasse zugeordnet.

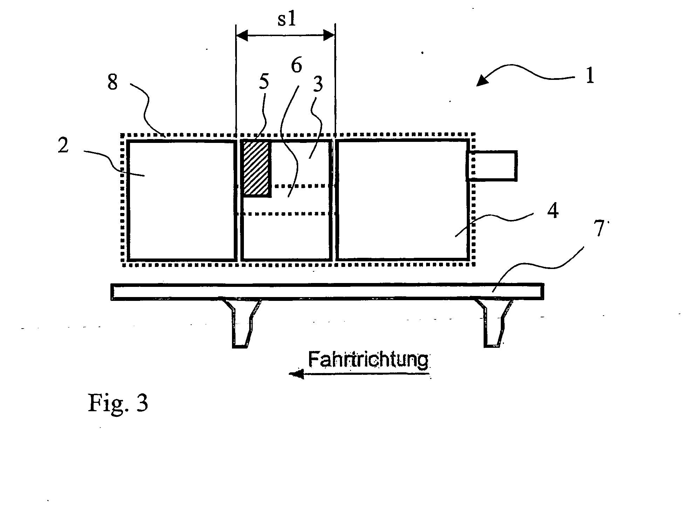

Fig. 3 zeigt eine weitere Ausführungsform des erfindungsgemäßen Abgasnachbehandlungssystems 1, das ähnlich zu der in Fig. 1 dargestellten Ausführungsform ausgeführt ist, jedoch einer schwereren Motorklasse zugeordnet ist. Dabei sind Bauteile mit analogen Funktionen mit denselben Bezugszeichen versehen.

Im Unterschied zu der in Fig. 1 dargestellten Ausführungsform ist der Reduktionsmitteltank 3 mit einer Länge von nur unwesentlich weniger als s1, d.h. nur unwesentlich weniger als der vorgegebene Abstand zwischen Partikelverminderungseinheit 2 und Stickoxidverminderungseinheit 4, und damit größer ausgeführt. Der Reduktionsmitteltank 3 grenzt daher stirnseitig bzw. endseitig eng an diese Einheiten. Somit füllt das Abgasnachbehandlungssystem 1 das Hüllvolumen 8 zu einem größeren Anteil aus und die wirksame äußere Oberfläche ist weiter verringert. Entsprechend der Zuordnung zu einer schwereren Motorklasse weisen die Partikelverminderungseinheit 4 mit etwa 180 1 sowie die Stickoxidverminderungseinheit 2 mit etwa 220 1 im Vergleich zu der in Fig. 1 dargestellten Ausführungsform ein größeres Volumen auf. Dementsprechend ist das Hüllvolumen 8 ebenfalls größer vorgegeben und weist vorzugsweise eine größere Breite auf.

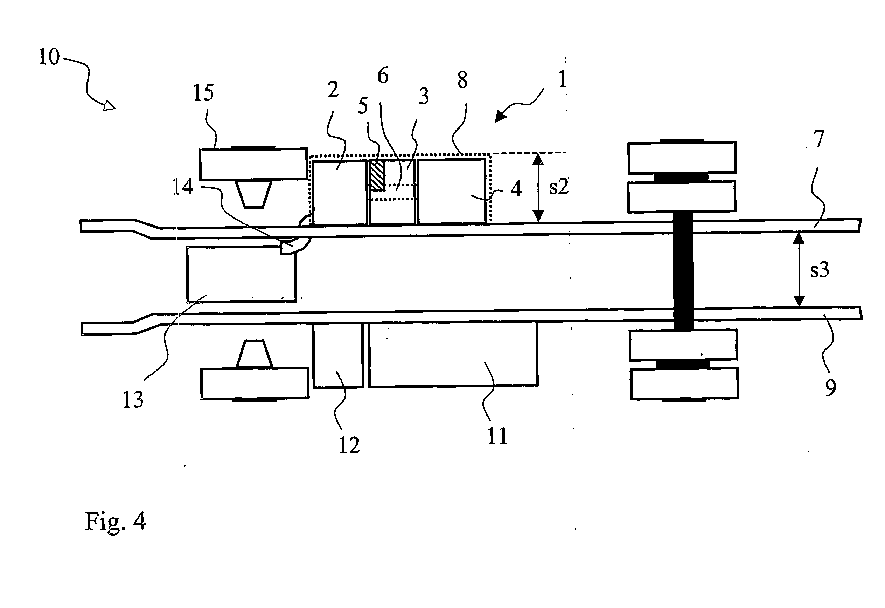

In Fig. 4 ist der Aufbau eines Nutzfahrzeuges 10 einer schweren Motorklasse dargestellt. Dabei sind die in den Fig. 1 und Fig.2 entsprechende Bauteile mit denselben Bezugszeichen gekennzeichnet. Das Abgasnachbehandlungssystem 1 ist hier seitlich außen an dem in Fahrtrichtung gesehen rechten Längsträger 7 angeordnet. Seitlich außen am gegenüberliegenden Längsträger 9 sind der Kraftstofftank 11 und die Fahrzeugbatterie 12 angeordnet. Durch diese Anordnung der relativ schweren Bauteile 1, 11, 12 wird erreicht, dass der Schwerpunkt des Nutzfahrzeugs 10 eine Lage etwa auf der Fahrzeuglängsachse einnimmt, was das Fahrverhalten verbessert. Das Abgasnachbehandlungssystem 1 ist wie in Fig. 2 dargestellt ausgeführt.

Der Motor 13 des Nutzfahrzeugs 10 ist als Reihenmotor ausgeführt. Der Abgasauslass des Motors ist zu der Fahrzeugseite gerichtet, an welcher auch das Abgasnachbehandlungssystem 1 angeordnet ist. In der Abgasauslassleitung des Motors 13 ist ein nicht dargestellter Abgasturbolader angeordnet. Für das vom Abgasturboladerausgang zur Partikelverminderungseinheit 2 geleitete Abgas ist eine Abgasleitung 14 mit möglichst geringer Länge vorgesehen, um Wärmeverluste soweit als möglich zu vermeiden. Aus diesem Grund ist die Platzierung des Hüllvolumens 8 so vorgegeben, dass das Abgasnachbehandlungssystem 1 stirnseitig in Fahrtrichtung so nahe wie möglich hinter dem Vorderrad 15 des Nutzfahrzeugs 10 angeordnet ist. Die seitlich Ausdehnung des Hüllvolumens 8 ist durch den Abstand s2 ihrer in Fahrtrichtung gesehen rechten Seitenfläche vom Längsträger 7 bestimmt. Dieser ist wiederum hauptsächlich durch den Abstand s3 der Längsträger 7, 9 und durch die maximal zulässige Fahrzeugbreite vorgegeben.

Das aus dem Abgasnachbehandlungssystem 1 abgeleitete Abgas wird über eine nicht dargestellte Abgasauslassleitung an die Fahrzeugumgebung abgegeben. Vorzugsweise ist diese Abgasauslassleitung auf die zur Fahrbahnmitte gerichtete, d.h. üblicherweise zur linken Fahrzeugseite geführt. Die Abgasauslassleitung kann jedoch auch anders geführt sein und beispielsweise auf der rechten Seite nach vorne und dann weiter senkrecht nach oben verlaufen, so dass das Abgas senkrecht nach oben geleitet wird.

## Patentansprüche

1. Abgasnachbehandlungssystem (1) für ein Nutzfahrzeug mit
- einer Partikelverminderungseinheit (2),
- einer der Partikelverminderungseinheit (2) nachgeschalteten Stickoxidverminderungseinheit (4), wobei die Stickoxidverminderungseinheit (4) mit einem Abstand (s1) zur Partikelverminderungseinheit (2) angeordnet ist,
- einer von der Partikelverminderungseinheit (2) zur Stickoxidverminderungseinheit (4) führenden Abgasverbindungsleitung (6) und
- einem Reduktionsmitteltank (3) zur Bevorratung eines für die Stickoxidverminderung einsetzbaren Reduktionsmittels,
wobei der Reduktionsmitteltank (3) zwischen der Partikelverminderungseinheit (2) und der Stickoxidverminderungseinheit (4) angeordnet ist,
**dadurch gekennzeichnet, dass**
die Partikelverminderungseinheit (2), der Reduktionsmitteltank (3) und die Stickoxidverminderungseinheit (4) hintereinander in einer linear fluchtenden Anordnung positioniert sind.

2. Abgasnachbehandlungssystem nach Anspruch 1,
**dadurch gekennzeichnet, dass**
der Reduktionsmitteltank (3) die Abgasverbindungsleitung (6) wenigstens teilweise umgibt.

3. Abgasnachbehandlungssystem nach Anspruch 1 oder 2,
**dadurch gekennzeichnet, dass**
der Reduktionsmitteltank (3) eine Ausformung (17) zur Aufnahme einer Reduktionsmitteldosiereinheit (5) aufweist.

4. Abgasnachbehandlungssystem nach einem der vorangehenden Ansprüche,
**dadurch gekennzeichnet, dass**
die Abgasverbindungsleitung (6) als Mischstrecke zur Vermischung von Abgas und dem Abgas zudosiertem Reduktionsmittel ausgeführt ist.

5. Abgasnachbehandlungssystem nach einem der vorangehenden Ansprüche,
**dadurch gekennzeichnet, dass**
die Partikelverminderungseinheit (2), die Stickoxidverminderungseinheit (4) und der Reduktionsmitteltank (3) als Einzelmodule ausgeführt sind.

6. Nutzfahrzeug mit einem Abgasnachbehandlungssystem nach einem der Ansprüche 1 bis 5,
**dadurch gekennzeichnet, dass**
das Abgasnachbehandlungssystem (1) innerhalb eines vorgebbaren quaderförmigen Hüllvolumens (8) angeordnet ist.

7. Nutzfahrzeug nach Anspruch 6,
**dadurch gekennzeichnet, dass**
das Hüllvolumen (8) sich an der von der Fahrzeuglängsachse abgewandten Seite eines ersten Längsträgers (7) in Fahrzeuglängsrichtung erstreckt.

8. Nutzfahrzeug nach Anspruch 7,
**dadurch gekennzeichnet, dass**
eine vom Abgasnachbehandlungssystem (1) weg führende Abgasauslassleitung auf die in Fahrzeugrichtung gegenüberliegende Seite des Nutzfahrzeugs geführt ist.

9. Nutzfahrzeug nach einem der Ansprüche 6 bis 8,
**dadurch gekennzeichnet, dass**
die von der Fahrzeuglängsachse abgewandte Seite des Hüllvolumens (8) einen in Abhängigkeit von einer Motorklasse des Nutzfahrzeugs vorgebbaren Abstand vom ersten Längsträger (7) aufweist.

10. Nutzfahrzeug nach einem der Ansprüche 6 bis 9,
**dadurch gekennzeichnet, dass**
das Abgasnachbehandlungssystem (1) auf einer an dem ersten Längsträger (7) befestigbaren Tragstruktur aufgebaut ist.

11. Nutzfahrzeug nach einem der Ansprüche 6 bis 10,
**dadurch gekennzeichnet, dass**
ein Kraftstofftank neben einem zweiten Längsträger des Nutzfahrzeugs an der von der Fahrzeuglängsachse abgewandten Seite des zweiten Längsträgers angeordnet ist.

## Claims

1. Exhaust treatment system (1) for a commercial vehicle, comprising
- a particulate reduction unit (2),
- a nitrogen oxide reduction unit (4) installed downstream of the particulate reduction unit (2), the nitrogen oxide reduction unit (4) being located at a distance from the particulate reduction unit (2),
- an exhaust connection line (6) leading from the particulate reduction unit (2) to the nitrogen oxide reduction unit (4) and
- a reducing agent tank (3) for the storage of a reducing agent usable for nitrogen oxide reduction,
wherein the reducing agent tank (3) is installed between the particulate reduction unit (2) and the nitrogen oxide reduction unit (4),
**characterised in that**
the particulate reduction unit (2), the reducing agent tank (3) and the nitrogen oxide reduction unit (4) are positioned one behind the other in linear alignment.

2. Exhaust treatment system according to claim 1,
**characterised in that**
the reducing agent tank (3) at least partially surrounds the exhaust connection line (6).

3. Exhaust treatment system according to claim 1 or 2,
**characterised in that**
the reducing agent tank (3) has a recess (17) for the accommodation of a reducing agent metering unit (5).

4. Exhaust treatment system according to any of the preceding claims,
**characterised in that**
the exhaust connection line (6) is designed as a mixing section for combining the exhaust gas with the reducing agent metered to the exhaust gas.

5. Exhaust treatment system according to any of the preceding claims,
**characterised in that**
the particulate reduction unit (2), the nitrogen oxide reduction unit (4) and the reducing agent tank (3) are designed as individual modules.

6. Commercial vehicle with an exhaust treatment system according to any of claims 1 to 5,
**characterised in that**
the exhaust treatment system (1) is accommodated within a presettable cuboid envelope volume (8).

7. Commercial vehicle according to claim 6,
**characterised in that**
the envelope volume (8) extends in the longitudinal direction of the vehicle on that side of a first side member (7) which is remote from the longitudinal axis of the vehicle.

8. Commercial vehicle according to claim 7,
**characterised in that**
an exhaust outlet line is routed from the exhaust treatment system (1) to that side of the commercial vehicle which is the opposite side in the longitudinal direction of the vehicle.

9. Commercial vehicle according to any of claims 6 to 8,
**characterised in that**
the side of the envelope volume (8) which is remote from the longitudinal axis of the vehicle is placed at a distance from the first side member (7) which is presettable in dependence on the engine class of the commercial vehicle.

10. Commercial vehicle according to any of claims 6 to 9,
**characterised in that**
the exhaust treatment system (1) is mounted on a support structure which can be secured to the first side member (7).

11. Commercial vehicle according to any of claims 6 to 10,
**characterised in that**
a fuel tank is disposed next to a second side member of the commercial vehicle on that side of the second side member which is remote from the longitudinal axis of the vehicle.

## Revendications

1. Système de post-traitement de gaz d'échappement (1) destiné à un véhicule utilitaire, comprenant
- une unité de diminution des particules (2),
- une unité de diminution des oxydes d'azote (4) placée en aval de l'unité de diminution des particules (2), l'unité de diminution des oxydes d'azote (4) étant agencée à une distance (s1) de l'unité de diminution des particules (2),
- une conduite de liaison (6) de gaz d'échappement menant de l'unité de diminution des particules (2) à l'unité de diminution des oxydes d'azote (4), et
- un réservoir d'agent de réduction (3) destiné au stockage d'un agent de réduction pouvant être utilisé pour la diminution des oxydes d'azote,
le réservoir d'agent de réduction (3) étant agencé entre l'unité de diminution des particules (2) et l'unité de diminution des oxydes d'azote (4),
**caractérisé**
**en ce que** l'unité de'diminution des particules (2), le réservoir d'agent de réduction (3) et l'unité de diminution des oxydes d'azote (4) sont positionnés les uns derrière les autres selon un agencement en alignement linéaire.

2. Système de post-traitement de gaz d'échappement selon la revendication 1,
**caractérisé en ce que** le réservoir d'agent de réduction (3) entoure au moins partiellement la conduite de liaison (6) de gaz d'échappement.

3. Système de post-traitement de gaz d'échappement selon la revendication 1 ou 2,
**caractérisé en ce que** le réservoir d'agent de réduction (3) présente un creux de forme (17) destiné à recevoir une unité de dosage d'agent de réduction (5).

4. Système de post-traitement de gaz d'échappement selon l'une des revendications précédentes,
**caractérisé en ce que** la conduite de liaison (6) de gaz d'échappement est réalisée sous la forme d'un parcours de mélange destiné à produire le mélange du gaz d'échappement et de l'agent de réduction additionné de manière dosée au gaz d'échappement.

5. Système de post-traitement de gaz d'échappement selon l'une des revendications précédentes,
**caractérisé en ce que** l'unité de diminution des particules (2), l'unité de diminution des oxydes d'azote (4) et le réservoir d'agent de réduction (3) sont réalisés sous la forme de modules individuels.

6. Véhicule utilitaire comprenant un système de post-traitement de gaz d'échappement selon l'une des revendications 1 à 5,
**caractérisé en ce que** le système de post-traitement de gaz d'échappement (1) est agencé à l'intérieur d'un volume-enveloppe (8) de forme parallélépipédique prédéterminé.

7. Véhicule utilitaire selon la revendication 6,
**caractérisé en ce que** le volume-enveloppe (8) s'étend dans la direction longitudinale du véhicule, sur le côté d'un premier longeron (7), qui est opposé au côté de ce longeron dirigé vers l'axe longitudinal du véhicule.

8. Véhicule utilitaire selon la revendication 7,
**caractérisé en ce qu'**une conduite de sortie de gaz d'échappement quittant le système de post-traitement de gaz d'échappement (1), mène sur le côté du véhicule utilitaire, qui est situé à l'opposé en se référant à la direction du véhicule.

9. Véhicule utilitaire selon l'une des revendications 6 à 8,
**caractérisé en ce que** le côté du volume-enveloppe (8) éloigné de l'axe longitudinal du véhicule, présente une distance du premier longeron (7), qui peut être prédéfinie en fonction de la classe de moteur du véhicule utilitaire.

10. Véhicule utilitaire selon l'une des revendications 6 à 9,
**caractérisé en ce que** le système de post-traitement de gaz d'échappement (1) est monté sur une structure_de support pouvant être fixée au premier longeron (7).

11. Véhicule utilitaire selon l'une des revendications 6 à 10,
**caractérisé en ce qu'**un réservoir de carburant est agencé à côté d'un deuxième longeron du véhicule utilitaire, sur le côté de ce deuxième longeron, qui est opposé au côté dirigé vers l'axe longitudinal du véhicule.
